# EUROPEAN PATENT APPLICATION

(11) **EP 4 780 010 A1**
(43) Date of publication of application: **22.07.2026**
(21) Application number: 25227137.4
(22) Date of filing: 24.12.2025
(51) Int. Cl.: H04N 23/56, H04N 23/74, H04N 23/957

(54) **IMAGE CAPTURE SYSTEM AND IMAGE GENERATION METHOD**

(30) Priority: 17.01.2025 US 202563746252 P; 01.10.2025 US 202519346572
(71) Applicant: Innolux Corporation, Jhunan Town, Miaoli County 35053 (TW)
(72) Inventor: SUMI, Naoki, 35053 Jhunan Town, Miaoli County (TW)
(74) Representative: Becker, Eberhard

(57) **Abstract**

An image capture system (1) including an image sensor (10), a lens element (11), a first light projection unit (12), a second light projection unit (13) and a control unit (14) is provided. The lens element (11) is disposed in front of the image sensor (10). The control unit (14) is coupled to the image sensor (10), the first light projection unit (12) and the second light projection unit (13). A first recording timing of the image sensor (10) is synchronized with a turn-on timing of the first light projection unit (12) to obtain a first image (RM), and a second recording timing of the image sensor (10) is synchronized with a turn-on timing of the second light projection unit (13) to obtain a second image (LM). An image generation method is also provided.

## Description

### BACKGROUND

### Technical Field

This disclosure relates to an image capture system and an image generation method.

### Description of Related Art

Currently, to capture images for surface light field displays (e.g., Kirameki display) that display different colors and/or brightness at different viewing angles, the light source is rotated around the subject while positions of the subject and the camera are fixed during the image capture process, which requires time and cost and makes video recording impossible.

### SUMMARY

The disclosure provides an image capture system and an image generation method that help to reduce time and/or cost of the image capture process and/or make video recording possible.

In an embodiment of the disclosure, an image capture system includes an image sensor, a lens element, a first light projection unit, a second light projection unit and a control unit. The lens element is disposed in front of the image sensor. The control unit is coupled to the image sensor, the first light projection unit and the second light projection unit. A first recording timing of the image sensor is synchronized with a turn-on timing of the first light projection unit to obtain a first image, and a second recording timing of the image sensor is synchronized with a turn-on timing of the second light projection unit to obtain a second image.

In an embodiment of the disclosure, an image generation method includes: turning on a first light projection unit and activating a first recording timing of an image sensor at the same time to obtain a first image; turning on a second light projection unit and activating a second recording timing of the image sensor at the same time to obtain a second image; and combining the first image and the second image.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate example embodiments of the disclosure and, together with the description, serve to explain the principles of the disclosure.
FIG. 1A and FIG. 1B are front views of an image capture system according to some embodiments of the disclosure, illustrating on-off states of a first light projection unit and a second light projection unit respectively at a first recording timing and a second recording timing of an image sensor.
FIG. 2 is a flow chart of an image generation method according to some embodiments of the disclosure.
FIG. 3, FIG. 4 and FIG. 5 are schematic diagrams respectively illustrating three methods of combining the first image and the second image.
FIG. 6A and FIG. 6B are front views of an image capture system according to some embodiments of the disclosure, illustrating on-off states of a first light projection unit and a second light projection unit respectively at a first recording timing and a second recording timing of an image sensor.
FIG. 7A and FIG. 7B are front views of an image capture system according to some embodiments of the disclosure, illustrating on-off states of a first light projection unit and a second light projection unit respectively at a first recording timing and a second recording timing of an image sensor.
FIG. 8 is a schematic diagram of light waveforms of a plurality of light emitting elements in the first light projection unit and the second light projection unit in FIG. 7A and FIG. 7B.
FIG. 9A and FIG. 9B are front views of an image capture system according to some embodiments of the disclosure, illustrating on-off states of a first light projection unit and a second light projection unit respectively at a first recording timing and a second recording timing of an image sensor.
FIG. 10A and FIG. 10B are front views of an image capture system according to some embodiments of the disclosure, illustrating on-off states of a first light projection unit, a second light projection unit and a third light projection unit respectively at a landscape mode and a portrait mode.
FIG. 11A and FIG. 11B are front views of an image capture system according to some embodiments of the disclosure, respectively illustrating a first light projection unit and a second light projection unit spaced at different distances from each other.
FIG. 12 is a schematic diagram of an image capture system according to some embodiments of the disclosure.
FIG. 13A and FIG. 13B are schematic diagrams of a first light projection unit and a second light projection unit of the image capture system in FIG. 12, respectively.
FIG. 14A and FIG. 14B are further schematic diagrams of a first light projection unit and a second light projection unit of the image capture system in FIG. 12, respectively.
FIG. 15A and FIG. 15B are further schematic diagrams of a first light projection unit and a second light projection unit of the image capture system in FIG. 12, respectively.
FIG. 16 is a schematic diagram of an image capture system according to some embodiments of the disclosure.
FIG. 17 is a schematic diagram of an image capture system according to some embodiments of the disclosure.

### DESCRIPTION OF THE EMBODIMENTS

Reference will now be made in detail to the exemplary embodiments of the disclosure, examples of which are illustrated in the accompanying drawings. Whenever possible, the same reference numerals are used in the drawings and descriptions to refer to the same or similar parts.

Throughout this specification and the claims, certain words are used to refer to specific components. One of ordinary skill in the art will appreciate that manufacturers of electronic devices may refer to the same component by different names. This disclosure is not intended to differentiate between components that have the same function but have different names. In the following description and claims, the words "include" and "comprise" are open-ended terms and should therefore be interpreted to mean "includes, but is not limited to...".

The directional terms mentioned in this disclosure, such as "up", "down", "front", "back", "left", "right", etc., are only for reference to the directions in the accompanying drawings. Accordingly, the directional terms used are illustrative and not limiting of the disclosure. In the drawings, each figure illustrates the general features of methods, structures, and/or materials used in particular embodiments. However, these drawings should not be interpreted as defining or limiting the scope or nature encompassed by these embodiments. For example, the relative sizes, thicknesses, and locations of various layers, regions, and/or structures may be reduced or exaggerated for clarity.

The electrical connection or coupling described in the disclosure may refer to either a direct connection or an indirect connection.

In the disclosure, the electronic device may include a display device, a backlight device, an antenna device, a packaging device, a sensing device, or a splicing device, but not limited thereto.

It should be noted that the following embodiments can be replaced, reorganized, and mixed with features of several different embodiments without departing from the spirit of the disclosure to complete other embodiments. Features in various embodiments may be mixed and matched as long as they do not violate the spirit of the invention or conflict with each other.

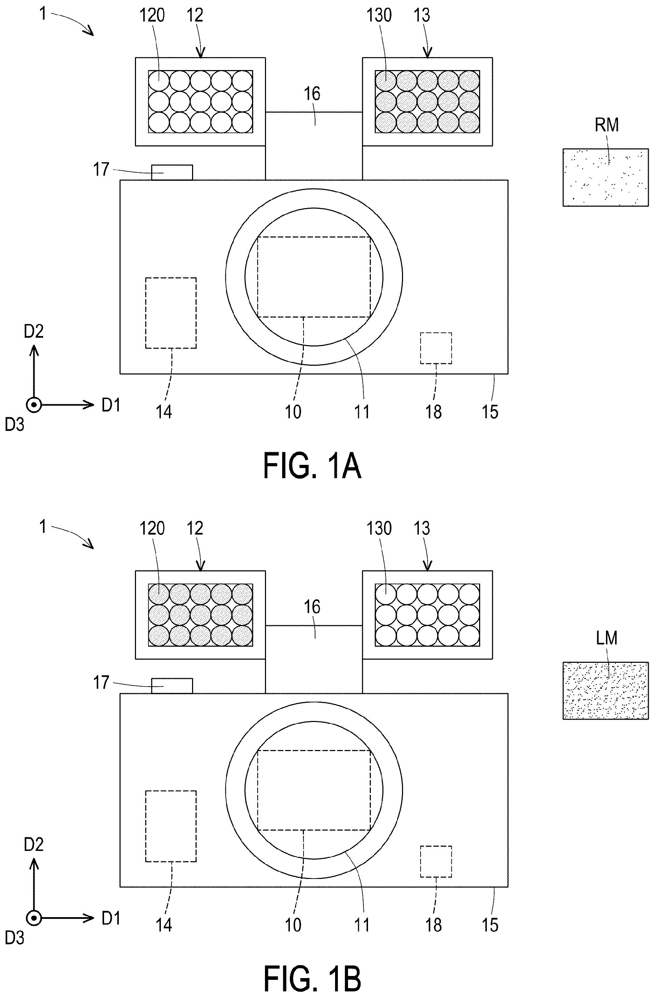

FIG. 1A and FIG. 1B are front views of an image capture system according to some embodiments of the disclosure, illustrating on-off states of a first light projection unit and a second light projection unit respectively at a first recording timing and a second recording timing of an image sensor.

Please refer to FIG. 1A and FIG. 1B, an image capture system 1 may include an image sensor 10, a lens element 11, a first light projection unit 12, a second light projection unit 13 and a control unit 14. The lens element 11 is disposed in front of the image sensor 10. The control unit 14 is coupled to the image sensor 10, the first light projection unit 12 and the second light projection unit 13. A first recording timing of the image sensor 10 is synchronized with a turn-on timing of the first light projection unit 12 to obtain a first image RM, and a second recording timing of the image sensor 10 is synchronized with a turn-on timing of the second light projection unit 13 to obtain a second image LM.

Specifically, the image capture system 1 is, for example, configured to capture images for surface light field displays, such as Kirameki display, but not limited thereto. Kirameki display can display surface gloss, transparency and texture of subjects under different viewing angles, and is particularly famous for showing the dazzling feeling of butterfly wings and the gloss of metal products. However, it should be understood that the application of the image capture system and the image generation method disclosed herein is not limited to Kirameki display.

The image sensor 10 may include a charge-coupled device (CCD) sensor or a complementary metal oxide semiconductor (CMOS) sensor, but not limited thereto. In some embodiments, as shown in FIG. 1A and FIG. 1B, the image capture system 1 may further include a camera body (or a housing) 15, and the image sensor 10 may be disposed in the camera body 15.

The lens element 11 is disposed in front of or upstream of the image sensor 10 to direct light beams (not shown) reflected from a subject (not shown; may also be referred to as a subject to be recorded) to the image sensor 10. For example, if the light beams reflected from the subject is transmitted along an opposite direction (e.g., the direction into the paper) of a direction D3, the image sensor 10 and the lens element 11 may be arranged along the direction D3. The lens element 11 may include one or more lenses, such as one or more convex lenses, one or more concave lenses, or a combination thereof, but not limited thereto. In some embodiments, although not shown, the image capture system 1 may further include a lens barrel connected to the camera body 15 along the direction D3, and the lens element 11 may be disposed in the lens barrel.

The first light projection unit 12 and the second light projection unit 13 are configured to provide light beams (not shown) to illuminate the subject to be recorded. FIG. 1A and FIG. 1B schematically illustrate fifteen light emitting elements 120 and fifteen light emitting elements 130, but the number of the light emitting elements 120 and the number of the light emitting elements 130 may be changed as needed. In some embodiments, the light emitting elements 120 and the light emitting elements 130 are, for example, light emitting diodes of the same color, such as white light emitting diodes, but not limited thereto.

In some embodiments, the relative positions of the light projection units (including the first light projection unit 12 and the second light projection unit 13) with respect to the image sensor 10 may be fixed. In some embodiments, in a front view of the image capture system 1, as shown in FIG. 1A or FIG. 1B, the fixing element 16 may be connected to the top of the camera body 15, and the first light projection unit 12 and the second light projection unit 13 may be connected to opposite sides (e.g., right and left sides) of the fixing element 16. For example, the camera body 15 and the fixing element 16 are arranged along a direction D2 perpendicular to the direction D3, and the first light projection unit 12, the fixing element 16 and the second light projection unit 13 are arranged along a direction D1 intersected with the direction D2 and perpendicular to the direction D3. In some embodiments, the direction D1 is perpendicular to the direction D2, but not limited thereto.

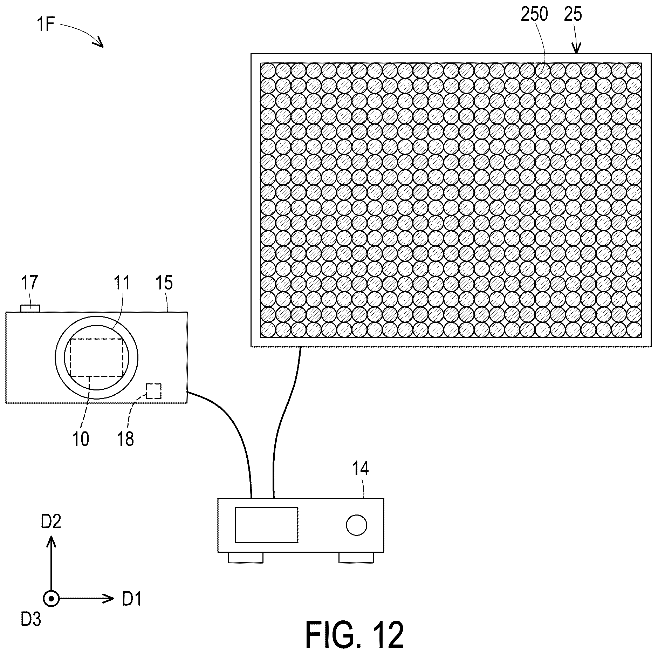

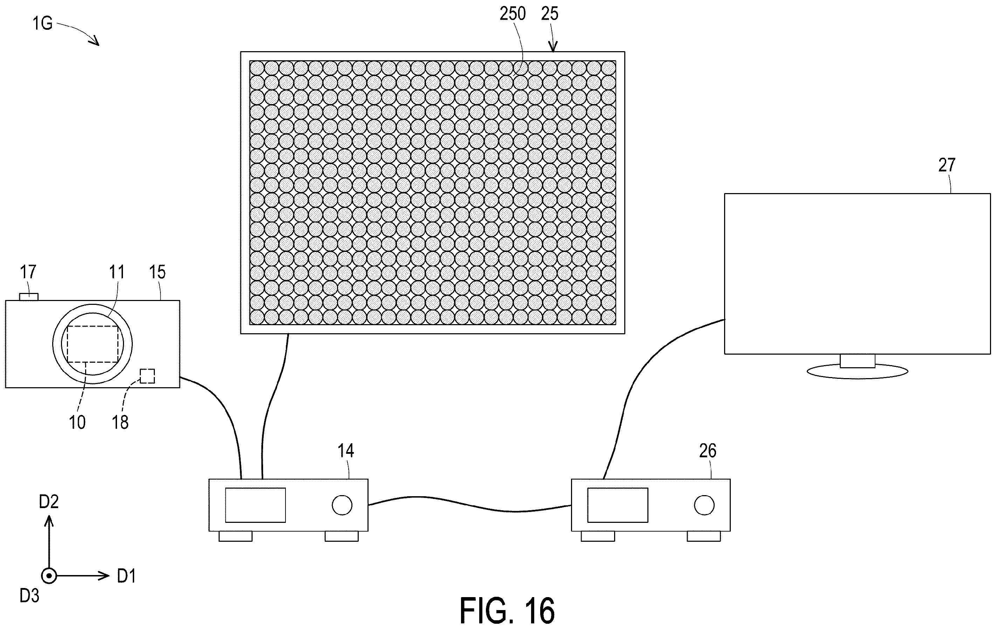

The control unit 14 is coupled to the image sensor 10, the first light projection unit 12 and the second light projection unit 13 for signal transmission between the control unit 14 and the image sensor 10, between the control unit 14 and the first light projection unit 12 and between the control unit 14 and the second light projection unit 13, so that the control unit 14 is capable of control recording timing of the image sensor 10, turn-on timing of the first light projection unit 12 and turn-on timing of the second light projection unit 13. For example, the control unit 14 may be disposed in the camera body 15, and the control unit 14 may be electrically connected to the image sensor 10, the first light projection unit 12 and the second light projection unit 13 through conductive wires (not shown), but not limited thereto. In some alternative embodiments, the control unit 14 may be a separate component located outside the camera body 15, as shown in FIG. 12 or FIG. 16.

The image capture system 1 may optionally include other elements according to different needs. For example, as shown in FIG. 1A or FIG. 1B, the image capture system 1 may further include an image capture button 17 (e.g., a shutter button or a video record button) coupled to the control unit 14, and the control unit 14 can initiate an image capture process when detecting that the image capture button 17 is pressed. FIG. 1A and FIG. 1B schematically illustrate that the image capture button 17 is disposed on the camera body 15 and between the camera body 15 and the first light projection unit 12, but the position of the image capture button 17 may be changed according to needs.

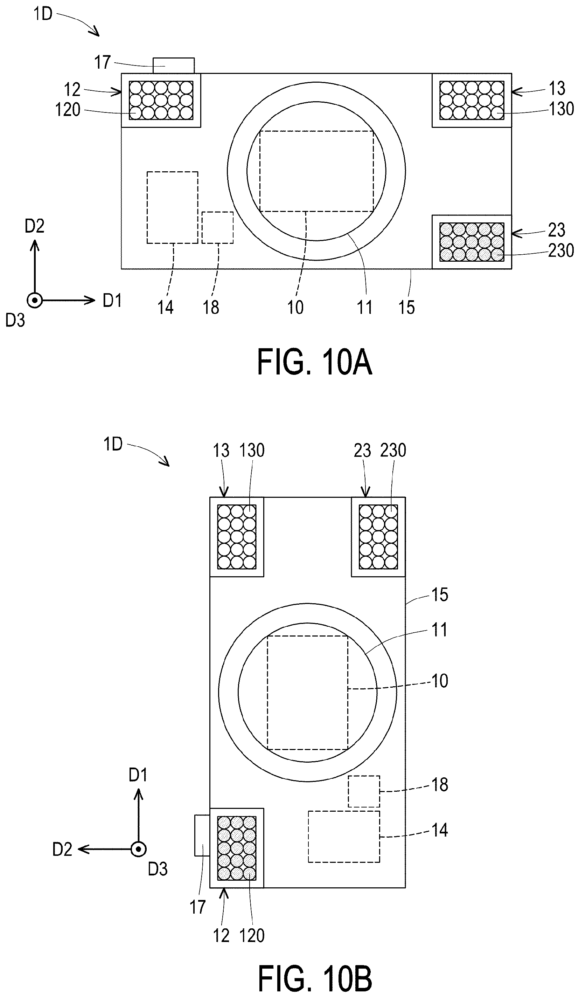

In some embodiments, the image capture system 1 may further include a memory 18 to store data from the image sensor 10. FIG. 1A and FIG. 1B schematically illustrate that the memory 18 is disposed in the camera body 15, and the memory 18 and the control unit 14 are disposed on opposite sides (e.g., left and right sides) of the image sensor 10 along the direction D2, but the positions of the memory 18, the image sensor 10 and the control unit 14 may be changed according to needs. For example, the memory 18 and the control unit 14 may be disposed on the same side of the image sensor 10 (as shown in FIG. 10A or FIG. 10B); alternatively, at least one of the memory 18 and the control unit 14 may be a separate component located outside the camera body 15.

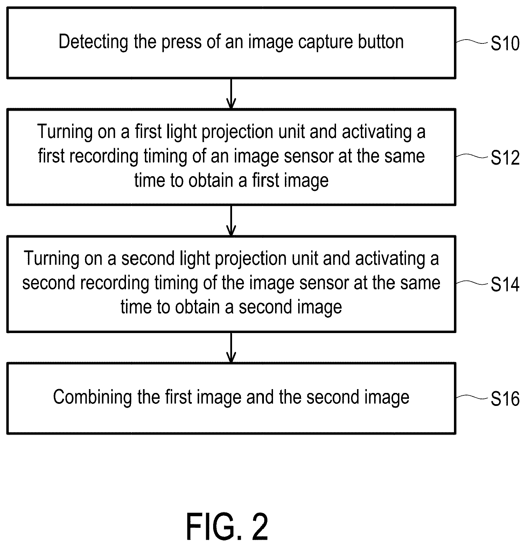

FIG. 2 is a flow chart of an image generation method according to some embodiments of the disclosure. Please refer to FIG. 1A to FIG. 2, the image generation method may include: turning on a first light projection unit 12 and activating a first recording timing of an image sensor 10 at the same time to obtain a first image RM (see step S12); turning on a second light projection unit 13 and activating a second recording timing of the image sensor 10 at the same time to obtain a second image (see step S14); and combining the first image and the second image LM (see step S16).

In some embodiments, as shown in FIG. 2, the image generation method may further include detecting the press of an image capture button 17 (see step S10) prior to the step S12. Once the image capture button 17 is pressed by the photographer, the control unit 14 proceeds the step S12 to step S16.

In step S12, the control unit 14 may send a signal to the first light projection unit 12 to turn on the first light projection unit 12 (see FIG. 1A), so that the plurality of light emitting elements 120 of the first light projection unit 12 output light beams to illuminate the subject to be recorded. Meanwhile, the control unit 14 may send a signal to the image sensor 10 to activate the first recording timing of the image sensor 10 so as to obtain the first image RM.

In step S14, the control unit 14 may send a signal to the second light projection unit 13 to turn on the second light projection unit 13 (see FIG. 1B), so that the plurality of light emitting elements 130 of the second light projection unit 13 output light beams to illuminate the subject to be recorded. Meanwhile, the control unit 14 may send a signal to the image sensor 10 to activate the second recording timing of the image sensor 10 so as to obtain the second image LM.

In the embodiments shown in FIG. 1A and FIG. 1B, the first light projection unit 12 and the second light projection unit 13 may be alternately turned on.

In some embodiments, the first recording timing (step S12; FIG. 1A) or the second recording timing (step S14; FIG. 1B) of the image sensor 10 may correspond to an exposure timing of a camera lens aperture (not shown). In addition, activating the first recording timing (step S12; FIG. 1A) or the second recording timing (step S14; FIG. 1B) of the image sensor 10 may include: initiating an exposure on the image sensor 10 through the lens element 11; completing the exposure on the image sensor 10 through the lens element 11; and acquire data from the image sensor 10.

Specifically, the camera lens aperture is the opening in the lens element 11 through which light beams pass to enter the lens element 11. The exposure timing of the camera lens aperture may refer to the timing that the aperture blades (not shown) open to let the light beams pass through. From the time the aperture blades open until the aperture blades close (i.e., the image sensor exposure process), the light beams can be transmitted to the image sensor 10 through the lens element 11. The image sensor 10 converts the optical signal received during the exposure process into an electrical signal and transmits the electrical signal to the control unit 14.

In some embodiments, activating the first recording timing (step S12; FIG. 1A) or the second recording timing (step S14; FIG. 1B) of the image sensor 10 may selectively include storing the data to the memory 18. Namely, the data corresponding to the first image RM and the second image LM may be stored in the memory 18. However, in some alternative embodiments, the step of storing the data to the memory 18 can be omitted.

In the image generation method, the steps S12 and S14 can be referred to as the image capture process. During the image capture process positions of all the elements of the image capture system 1 and the subject to be recorded may be fixed. Specifically, the positions of the first light projection unit 12 and the second light projection unit 13 relative to the image sensor 10 are different, thereby the first image RM obtained by turning on the first light projection unit 12 at the first recording time of the image sensor 10 and the second image LM obtained by turning on the second light projection unit 13 at the second recording time of the image sensor 10 are equivalent to multiple images obtained by changing the position of a single light projection unit while the positions of the image sensor 10 and the subject to be recorded are fixed. Therefore, multiple images of the subject to be recorded at different light irradiation positions/angles can be obtained without the need to physically change the position of the light projection unit(s). Accordingly, recording time and/or cost of the image capture process can be reduced. In addition, not only image recording but also video recording is possible, even for a single photographer.

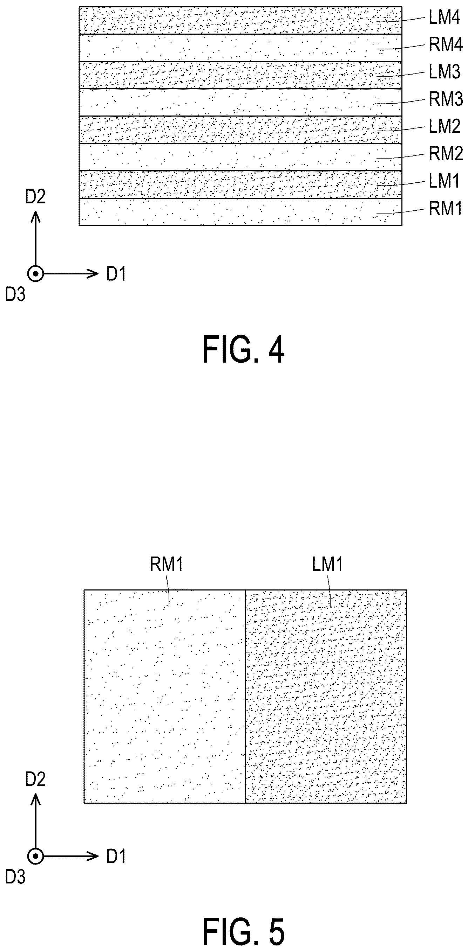

In step S16, the control unit 14 may combine the first image RM and the second image LM. Specifically, the first image RM and the second image LM may be used to form one frame of image for Kirameki display. In some embodiments, as shown in FIG. 4 and FIG. 5, combining the first image RM and the second image LM may include combining the first image RM and the second image LM in a line by line format (see FIG. 4) or a side by side format (see FIG. 5).

For example, as shown in FIG. 4, the first image RM can be divided into a plurality of line portions (e.g., a line portion RM1, a line portion RM2, a line portion RM3 and a line portion RM4), and the second image LM can be divided into a plurality of line portions (e.g., a line portion LM1, a line portion LM2, a line portion LM3 and a line portion LM4). In some embodiments, the plurality of line portions of each of the first image RM and the second image LM may extend along the direction D1 and alternately arranged along the direction D2 so as to form one frame of image for Kirameki display, but not limited thereto. In some alternative embodiments, the plurality of line portions of each of the first image RM and the second image LM may extend along the direction D2 and alternately arranged along the direction D1 so as to form one frame of image for Kirameki display.

As shown in FIG. 5, each of the first image RM and the second image LM can be cut half, wherein half of the first image RM and half of the second image LM can be arranged along the direction D1 so as to form one frame of image for Kirameki display, but not limited thereto. In some alternative embodiments, half of the first image RM and half of the second image LM can be arranged along the direction D2 so as to form one frame of image for Kirameki display.

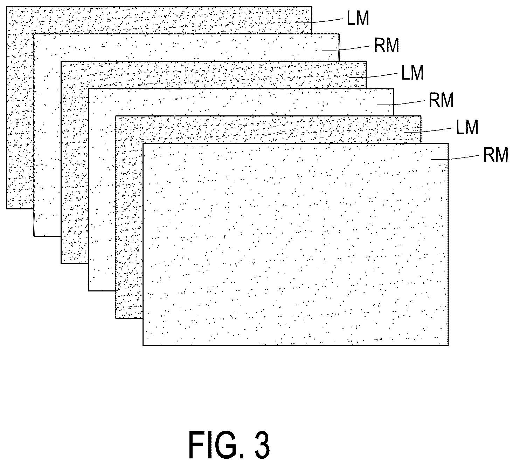

In some embodiments, turning on the first light projection unit 12 and activating the first recording timing of the image sensor 10 at the same time to obtain the first image RM and turning on the second light projection unit 13 and activating the second recording timing of the image sensor 10 at the same time to obtain the second image LM may be repeated until a video recording stops. In these embodiments, a plurality of first images RM and a plurality of second images LM can be obtained, wherein the plurality of first images RM and the plurality of second images LM are obtained alternately in a continuous time sequence. In addition, each of the first images RM and an adjacent second image LM can be used to form one frame of image for Kirameki display. For example, as shown in FIG. 3, the plurality of first images RM and the plurality of second images LM can be displayed alternately in a continuous time sequence, and the time interval between two adjacent first images RM (or two adjacent second images LM) may be shorter than the persistence of vision of human eyes, so that human eyes can watch a smooth video.

In the above embodiments, the first light projection unit 12 and the second light projection unit 13 are alternately turned on. However, the disclosure is not limited thereto. In some alternative embodiments described later, at each of the first recording timing and the second recording timing of the image sensor 10, a plurality of light emitting elements (120 or 130) of each of the first light projection unit 12 and the second light projection unit 13 can be at least partially turned on, and wavelengths or polarizations of light beams from the first light projection unit 12 and the second light projection unit 13 at the first recording timing or the second recording timing of the image sensor 10 can be different.

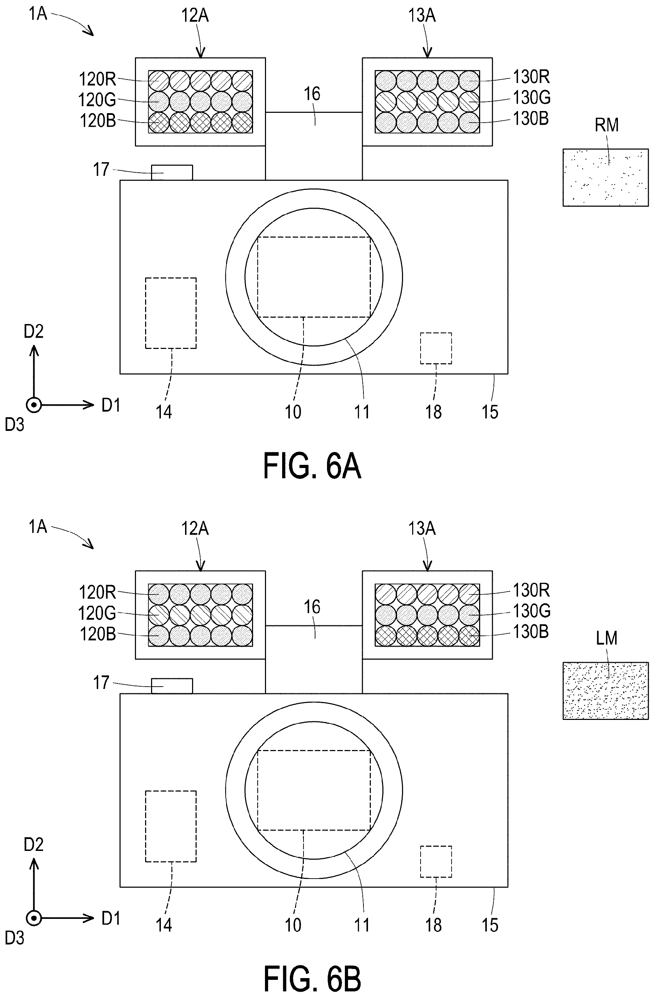

Please refer to FIG. 6A and FIG. 6B, the main differences between an image capture system 1A and the image capture system 1 in FIG. 1A and FIG. 1B are described below.

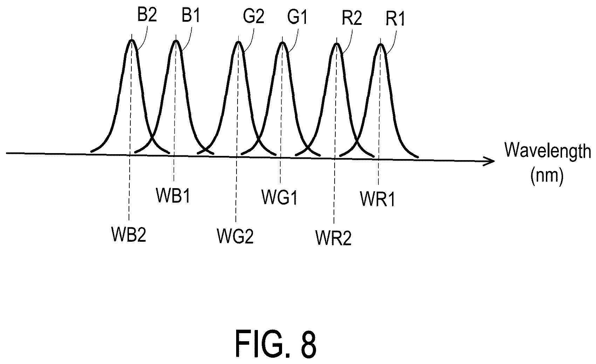

In the image capture system 1A, a first light projection unit 12A include a plurality of red light emitting elements 120R, a plurality of green light emitting elements 120G and a plurality of blue light emitting elements 120B, and a second light projection unit 13A include a plurality of red light emitting elements 130R, a plurality of green light emitting elements 130G and a plurality of blue light emitting elements 130B, wherein the light beams (e.g., red light beams R1 in FIG. 8) from the plurality of red light emitting elements 120R and the plurality of red light emitting elements 130R have the same peak wavelength (also referred to as "first peak wavelength"; e.g., peak wavelength WR1 in FIG. 8), the light beams (e.g., green light beams G1 in FIG. 8) from the plurality of green light emitting elements 120G and the plurality of green light emitting elements 130G have the same peak wavelength (also referred to as "third peak wavelength"; e.g., peak wavelength WG1 in FIG. 8), and the light beams (e.g., blue light beams B1 in FIG. 8) from the plurality of blue light emitting elements 120B and the plurality of blue light emitting elements 130B have the same peak wavelength (also referred to as "second peak wavelength"; e.g., peak wavelength WB1 in FIG. 8).

In some embodiments, as shown in FIG. 6A, the first recording timing of the image sensor 10 may be synchronized with a turn-on timing of the plurality of red light emitting elements 120R and the plurality of blue light emitting elements 120B of the first light projection unit 12A and a turn-on timing of the plurality of green light emitting elements 130G of the second light projection unit 13A to obtain the first image RM. In addition, the plurality of green light emitting elements 120G of the first light projection unit 12A and the plurality of red light emitting elements 130R and the plurality of blue light emitting elements 130B of the second light projection unit 13A may be in an off state. In this way, at the first recording timing of the image sensor 10, the light beams from the first light projection unit 12A include a first peak wavelength (e.g., peak wavelength WR1 in FIG. 8) and a second peak wavelength (e.g., peak wavelength WB1 in FIG. 8) different from the first peak wavelength, and the light beams from the second light projection unit 13A include a third peak wavelength (e.g., peak wavelength WG1 in FIG. 8) different from the first peak wavelength and the second peak wavelength. In some embodiments, as shown in FIG. 8, the third peak wavelength may be between the first peak wavelength and the second peak wavelength.

In some embodiments, as shown in FIG. 6B, the second recording timing of the image sensor 10 may be synchronized with a turn-on timing of the plurality of green light emitting elements 120G of the first light projection unit 12A and a turn-on timing of the plurality of red light emitting elements 130R and the plurality of blue light emitting elements 130B of the second light projection unit 13A to obtain the second image LM. In addition, the plurality of red light emitting elements 120R and the plurality of blue light emitting elements 120B of the first light projection unit 12A and the plurality of green light emitting elements 130G of the second light projection unit 13A may be in an off state. In this way, at the second recording timing of the image sensor 10, the light beams from the first light projection unit 12A include the third peak wavelength, and the light beams from the second light projection unit 13A include the first peak wavelength and the second peak wavelength.

Since the plurality of light emitting elements of each of the first light projection unit 12A and the second light projection unit 13A are at least partially turned on at each of the first recording timing and the second recording timing of the image sensor 10, an annoying flicker (light blinking) issue can be reduced, which helps to reduce the discomfort of the person being photographed.

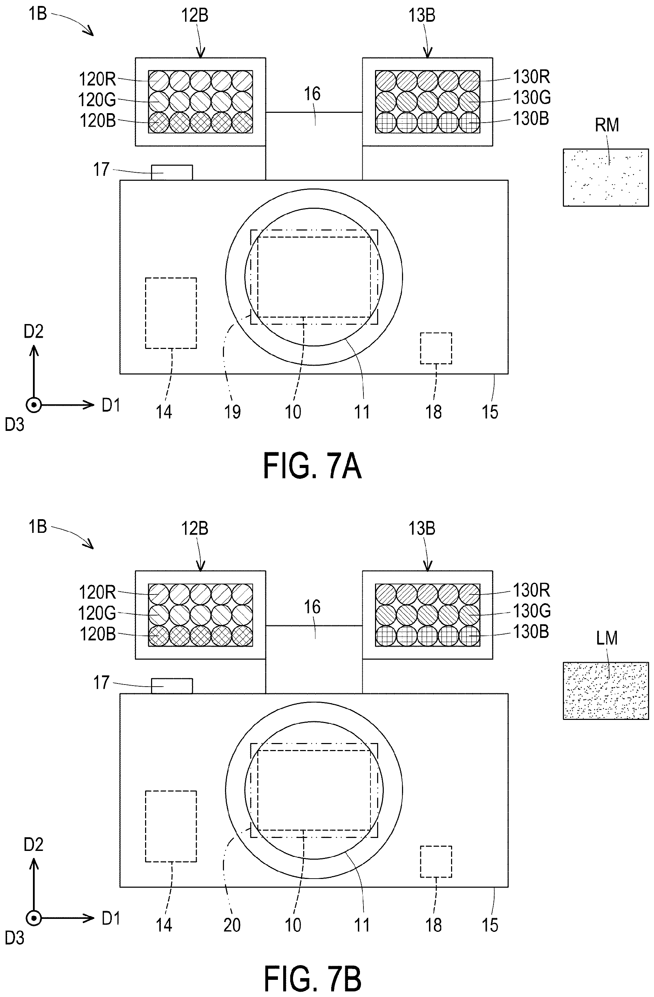

FIG. 7A and FIG. 7B are front views of an image capture system according to some embodiments of the disclosure, illustrating on-off states of a first light projection unit and a second light projection unit respectively at a first recording timing and a second recording timing of an image sensor. FIG. 8 is a schematic diagram of light waveforms of a plurality of light emitting elements in the first light projection unit and the second light projection unit in FIG. 7A and FIG. 7B. Please refer to FIG. 7A to FIG. 8, the main differences between an image capture system 1B and the image capture system 1 in FIG. 1A and FIG. 1B are described below.

In the image capture system 1B, a first light projection unit 12B include a plurality of red light emitting elements 120R, a plurality of green light emitting elements 120G and a plurality of blue light emitting elements 120B, and a second light projection unit 13B include a plurality of red light emitting elements 130R, a plurality of green light emitting elements 130G and a plurality of blue light emitting elements 130B. The first red light beams (e.g., red light beams R1 in FIG. 8) from the plurality of red light emitting elements 120R have a peak wavelength WR1 different from a peak wavelength WR2 of the second red light beams (e.g., red light beams R2 in FIG. 8) from the plurality of red light emitting elements 130R. The first green light beams (e.g., green light beams G1 in FIG. 8) from the plurality of green light emitting elements 120G have a peak wavelength WG1 different from a peak wavelength WG2 of the second green light beams (e.g., green light beams G2 in FIG. 8) from the plurality of green light emitting elements 130G. The first blue light beams (e.g., blue light beams B1 in FIG. 8) from the plurality of blue light emitting elements 120B have a peak wavelength WB1 different from a peak wavelength WB2 of the second blue light beams (e.g., blue light beams B2 in FIG. 8) from the plurality of blue light emitting elements 130B.

At each of the first recording timing (see FIG. 7A) and the second recording timing (see FIG. 7B) of the image sensor 10, the light beams from the first light projection unit 12B include a first red light beam (e.g., red light beam R1 in FIG. 8), a first green light beam (e.g., green light beam G1 in FIG. 8) and a first blue light beam (e.g., blue light beam B1 in FIG. 8), the light beams from the second light projection unit 13B include a second red light beam (e.g., red light beam R2 in FIG. 8), a second green light beam (e.g., green light beam G2 in FIG. 8) and a second blue light beam (e.g., blue light beam B2 in FIG. 8), wherein peak wavelengths of the first red light beam and the second red light beam are different, peak wavelengths of the first green light beam and the second green light beam are different, and peak wavelengths of the first blue light beam and the second blue light beam are different.

In some embodiments, as shown in FIG. 7A and FIG. 7B, the image capture system 1B further includes a first filter 19 and a second filter 20 respectively arranged in front of the image sensor 10 at the first recording timing and the second recording timing of the image sensor 10, wherein the first filter 19 allows the first red light beam, the first green light beam and the first blue light beam to pass through and filters the second red light beam, the second green light beam and the second blue light beam, and the second filter 20 allows the second red light beam, the second green light beam and the second blue light beam to pass through and filters the first red light beam, the first green light beam and the first blue light beam.

In some embodiments, the first filter 19 and the second filter 20 may be stored in the camera body 15, and the image capture system 1B may further include a position adjustment device (not shown) coupled to the control unit 14 and configured to change the positions of the first filter 19 and the second filter 20 according to the control signal from the control unit 14. For example, at the first recording timing of the image sensor 10, the control unit 14 can send a control signal to the position adjustment device, instructing the position adjustment device to move the first filter 19 to a first position located in front of the image sensor 10 and between the lens element 11 and the image sensor 10, and to move the second filter 20 to a second position not in front of the image sensor 10 and not between the lens element 11 and the image sensor 10. On the other hand, at the second recording timing of the image sensor 10, the control unit 14 can send another control signal to the position adjustment device, instructing the position adjustment device to move the second filter 20 to the first position, and to move the first filter 19 to a third position not in front of the image sensor 10 and not between the lens element 11 and the image sensor 10. The third position and the second position may be the same or different.

In this way, at the first recording timing of the image sensor 10, the first filter 19 disposed in front of the image sensor 10 can reduce the amount of the second red light beam (e.g., red light beam R2 in FIG. 8), the second green light beam (e.g., green light beam G2 in FIG. 8) and the second blue light beam (e.g., blue light beam B2 in FIG. 8) received by the image sensor 10, and at the second recording timing of the image sensor 10, the second filter 20 can reduce the amount of the first red light beam (e.g., red light beam R1 in FIG. 8), the first green light beam (e.g., green light beam G1 in FIG. 8) and the first blue light beam (e.g., blue light beam B1 in FIG. 8) received by the image sensor 10.

Since the plurality of light emitting elements of each of the first light projection unit 12B and the second light projection unit 13B are all turned on at each of the first recording timing and the second recording timing of the image sensor 10, the annoying flicker (light blinking) issue can be minimized or eliminated, which helps to reduce the discomfort of the person being photographed.

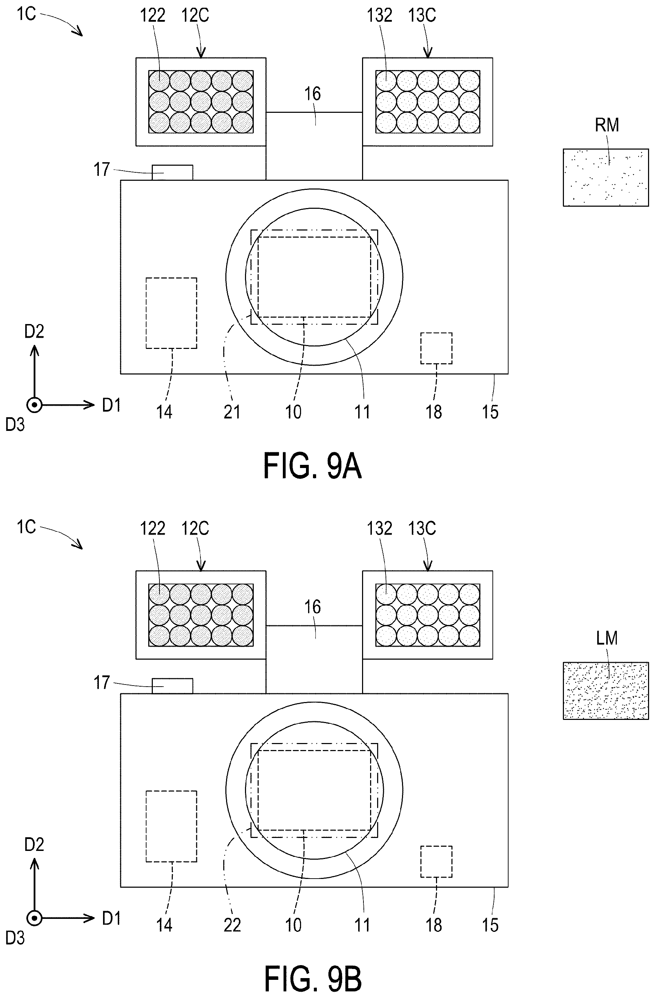

Please refer to FIG. 9A and FIG. 9B, the main differences between an image capture system 1C and the image capture system 1 in FIG. 1A and FIG. 1B are described below.

In the image capture system 1C, a first light projection unit 12C include a plurality of light emitting elements 122, and a second light projection unit 13C include a plurality of light emitting elements 132, wherein the light beams from the first light projection unit 12C and the second light projection unit 13C at the first recording timing or the second recording timing of the image sensor 10 are circularly polarized light beams in different directions.

Specifically, the light beams from the first light projection unit 12C may be right-handed circular polarized light beams, and the light beams from the second light projection unit 13C may be left-handed circular polarized light beams. In addition, as shown in FIG. 9A and FIG. 9B, each of the first recording timing and the second recording timing of the image sensor 10 may be synchronized with a turn-on timing of the plurality of light emitting elements 122 of the first light projection unit 12C and a turn-on timing of the plurality of light emitting elements 132 of the second light projection unit 13C to obtain the first image RM and second image LM.

In some embodiments, as shown in FIG. 9A and FIG. 9B, the image capture system 1C further includes a first polarizer 21 and a second polarizer 22 respectively arranged in front of the image sensor 10 at the first recording timing and the second recording timing of the image sensor 10, wherein the first polarizer 21 allows the light beams from the first light projection unit 12C to pass through and filters the light beams from and the second light projection unit 13C, and the second polarizer 22 allows the light beams from the second light projection unit 13C to pass through and filters the light beams from and the first light projection unit 12C.

In some embodiments, the first polarizer 21 and the second polarizer 22 may be a liquid crystal module stored in the camera body 15, and the polarization direction of the liquid crystal module can be controlled by changing the tilting state of the liquid crystals in the liquid crystal module through electrical control. For example, when the polarization direction of the liquid crystal module is switched to a first polarization direction, the liquid crystal module can be used as the first polarizer 21, and when the polarization direction of the liquid crystal module is switched to a second polarization direction, the liquid crystal module can be used as the second polarizer 22.

In this way, at the first recording timing of the image sensor 10, the first polarizer 21 disposed in front of the image sensor 10 can reduce the amount of the left-handed circular polarized light beams (or right-handed circular polarized light beams in some alternative embodiments) received by the image sensor 10, and at the second recording timing of the image sensor 10, the second polarizer 22 can reduce the amount of the right-handed circular polarized light beams (or left-handed circular polarized light beams in some alternative embodiments) received by the image sensor 10.

Since the plurality of light emitting elements of each of the first light projection unit 12C and the second light projection unit 13C are all turned on at each of the first recording timing and the second recording timing of the image sensor 10, the annoying flicker (light blinking) issue can be minimized or eliminated, which helps to reduce the discomfort of the person being photographed. Since the reflection of light beams on a surface of certain materials will change the circular polarization direction, the first image RM and the second image LM need to be post-processed in the embodiments of FIG. 9A and FIG. 9B.

FIG. 10A and FIG. 10B are front views of an image capture system according to some embodiments of the disclosure, illustrating on-off states of a first light projection unit, a second light projection unit and a third light projection unit respectively at a landscape mode and a portrait mode. Please refer to FIG. 10A and FIG. 10B, the main differences between an image capture system 1D and the image capture system 1 in FIG. 1A and FIG. 1B are described below.

The image capture system 1D further includes a third light projection unit 23, wherein the first light projection unit 12 and the second light projection unit 13 are arranged along a first direction (e.g., the direction D1), and the second light projection unit 13 and the third light projection unit 23 are arranged along a second direction (e.g., the direction D2) different from the first direction.

The third light projection unit 23 is also configured to provide light beams (not shown) to illuminate the subject to be recorded, and the third light projection unit 23 may include a plurality of light emitting elements 230.

In some embodiments, as shown in FIG. 10A and FIG. 10B, the first light projection unit 12, the second light projection unit 13 and the third light projection unit 23 may be disposed in the camera body 15, wherein the first light projection unit 12, the second light projection unit 13 and the third light projection unit 23 may be disposed in the camera body 15 and may be located at three corners of the camera body 15, and the memory 18 and the control unit 14 may be disposed adjacent to a fourth corner of the camera body 15, but not limited thereto.

The control unit 14 is further coupled to the third light projection unit 23 for signal transmission between the control unit 14 and the third light projection unit 23, so that the control unit 14 is capable of control turn-on timing of the third light projection unit 23. For example, the control unit 14 may be electrically connected to the third light projection unit 23 through conductive wires (not shown), but not limited thereto.

Through the arrangement of the first light projection unit 12, the second light projection unit 13 and the third light projection unit 23, the image capture system 1D can take photos and/or videos in landscape mode or in portrait mode. Under the landscape mode, as shown in FIG. 10A, the first light projection unit 12 and the second light projection unit 13 may be turned on alternately as described above, and the third light projection unit 23 may be in an off state at each of the first and second recording timings of the image sensor 10. Under the portrait mode, as shown in FIG. 10B, the second light projection unit 13 and the third light projection unit 23 may be turned on alternately similar to the above, and the first light projection unit 12 may be in an off state at each of the first and second recording timings of the image sensor 10.

Although embodiments of FIG. 10A and FIG. 10B are modifications based on the structure in embodiments of FIG. 1A and FIG. 1B, it should be understood that other embodiments of the present disclosure may also be modified in the same or similar manner, which will not be described in detail below.

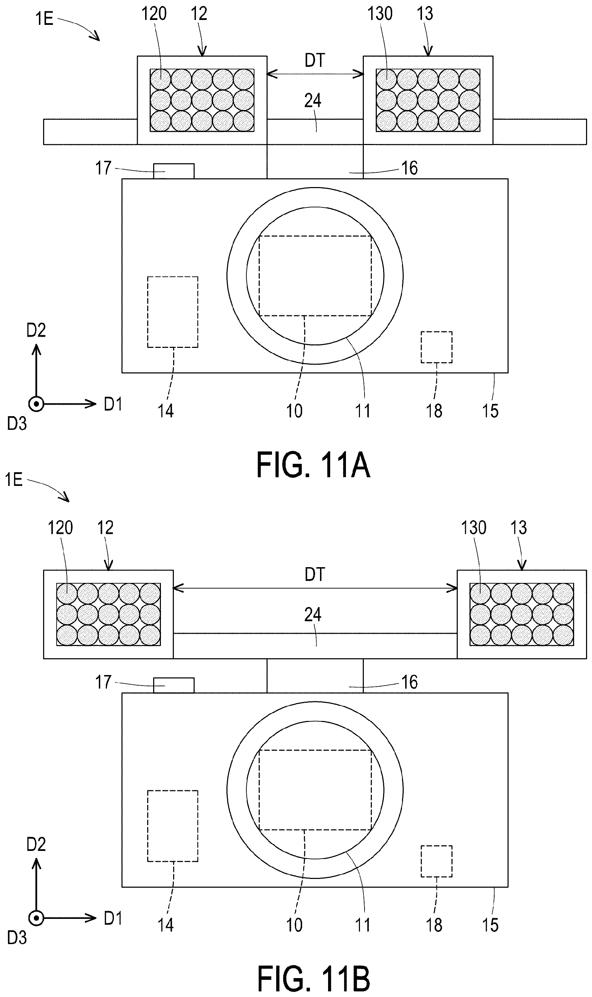

FIG. 11A and FIG. 11B are front views of an image capture system according to some embodiments of the disclosure, respectively illustrating a first light projection unit and a second light projection unit spaced at different distances from each other. Please refer to FIG. 11A and FIG. 11B, the main differences between an image capture system 1E and the image capture system 1 in FIG. 1A and FIG. 1B are described below.

In the image capture system 1E, a distance DT between the first light projection unit 12 and the second light projection unit 13 is adjustable. For example, the image capture system 1E may further include a track 24 extending along the direction D1, and the first light projection unit 12 and the second light projection unit 13 are disposed on the track 24 so that the first light projecting unit 12 and the second light projecting unit 13 can shift in a direction parallel to the direction D1, and therefore the distance DT between the first light projection unit 12 and the second light projection unit 13 in the direction D1 is adjustable.

The greater the distance DT between the first light projection unit 12 and the second light projection unit 13, the more obvious the shining/lustrous effect in the image/video; the smaller the distance DT, the less obvious the shining/lustrous effect in the image/video. Through the arrangement of the first light projection unit 12, the second light projection unit 13 and the track 24, the distance DT can be adjusted based on the user demands.

Although embodiments of FIG. 11A and FIG. 11B are modifications (for example, the track 24 is further included to facilitate adjustment of the distance DT between the first light projection unit 12 and the second light projection unit 13) based on the structure in embodiments of FIG. 1A and FIG. 1B, it should be understood that other embodiments of the present disclosure may also be modified in the same or similar manner, which will not be described in detail below.

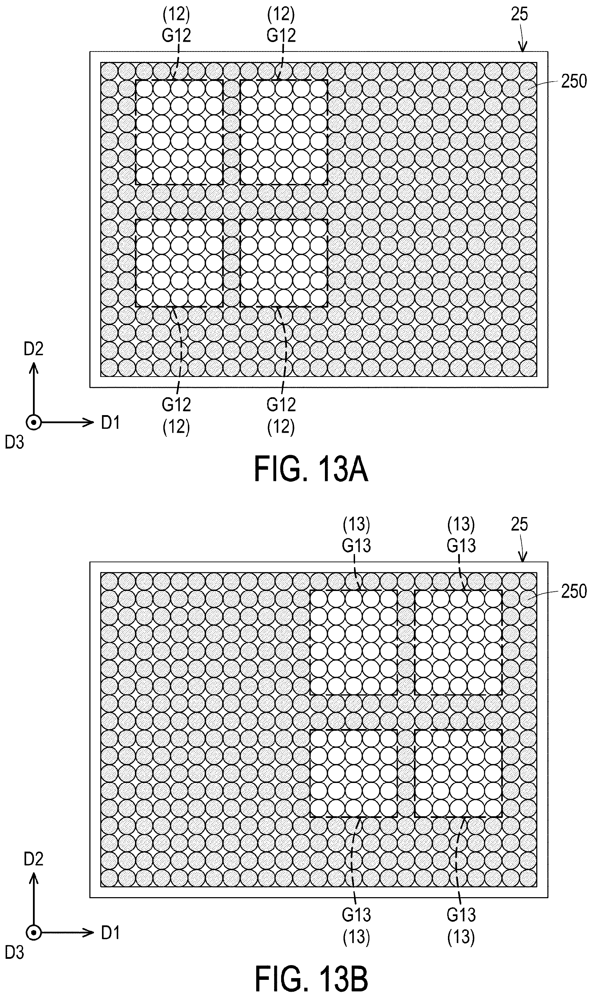

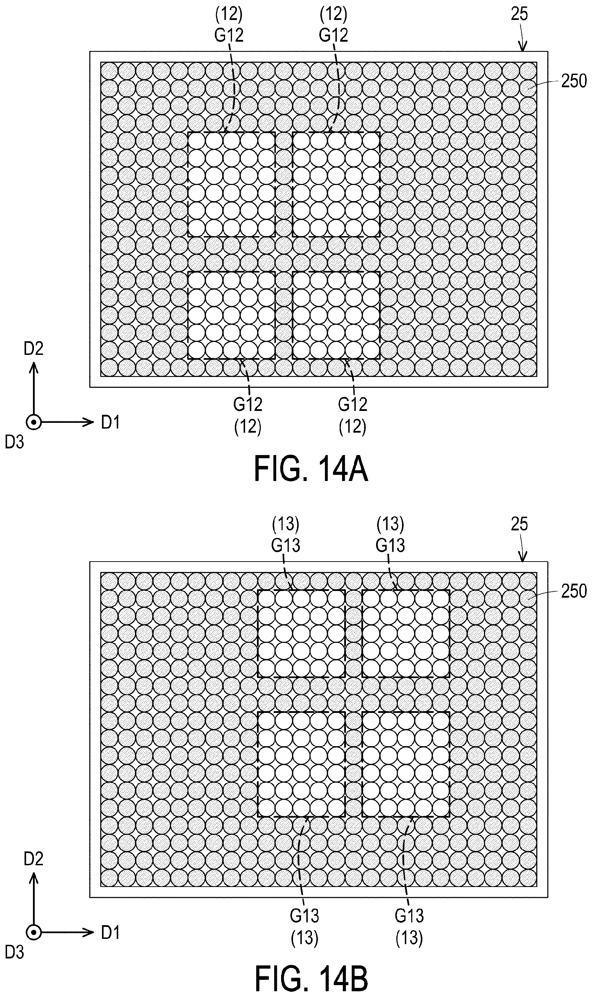

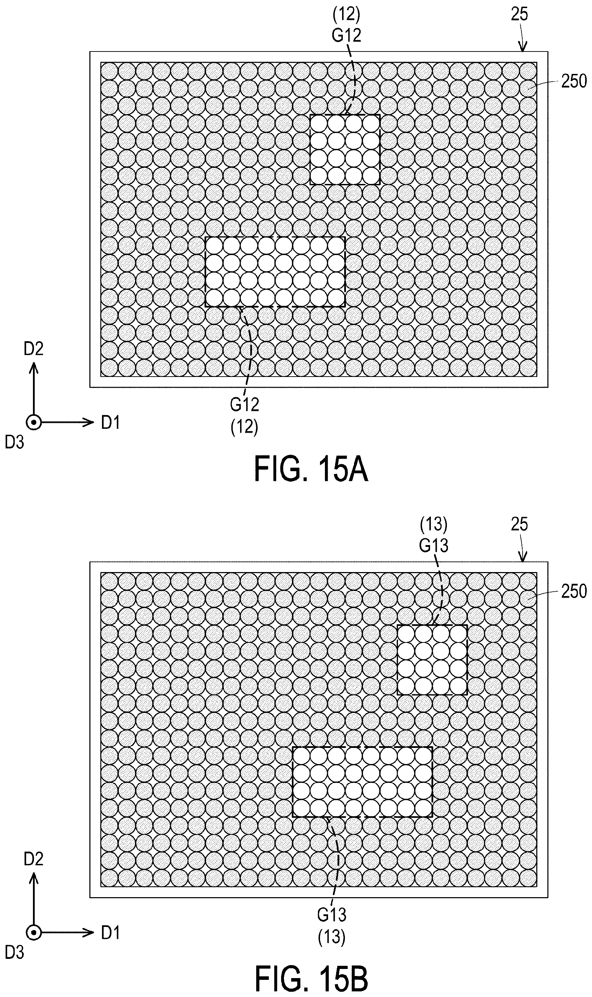

FIG. 12 is a schematic diagram of an image capture system according to some embodiments of the disclosure. FIG. 13A and FIG. 13B are schematic diagrams of a first light projection unit and a second light projection unit of the image capture system in FIG. 12, respectively. FIG. 14A and FIG. 14B are further schematic diagrams of a first light projection unit and a second light projection unit of the image capture system in FIG. 12, respectively. FIG. 15A and FIG. 15B are further schematic diagrams of a first light projection unit and a second light projection unit of the image capture system in FIG. 12, respectively. Please refer to FIG. 12 to FIG. 15B, the main differences between an image capture system 1F and the image capture system 1 in FIG. 1A and FIG. 1B are described below.

In the image capture system 1F, the control unit 14 is a separate component located outside the camera body 15. In addition, the first light projection unit 12 and the second light projection unit 13 include different light emitting elements 250 within a light emitting element array 25, such as a white light emitting diode array, but not limited thereto. The light emitting element array 25 may be coupled with the control unit 14 in a wireless or wired manner for signal transmission. Moreover, the light emitting element array 25 does not need to be fixed to the camera body 15, so the fixing element 16 in FIG. 1A and FIG. 1B can be omitted.

In the image capture system 1F, the light emitting element array 25 includes a plurality of light emitting elements 250 arranged along the direction D1 and the direction D2, and some portions of the plurality of light emitting elements 250 can be served as the first light projection unit 12 and the second light projection unit 13.

For example, at the first recording timing of the image sensor, as shown in FIG. 13A, M groups G12 of light emitting elements 250 among the plurality of light emitting elements 250 may be turned on to obtain a first image. M can be a positive integer greater than or equal to 1. For example, M may be 4 or 2, but not limited thereto. At the second recording timing of the image sensor, N groups G13 of light emitting elements 250 among the plurality of light emitting elements 250 may be turned on to obtain a second image. N can be a positive integer greater than or equal to 1. For example, N may be 4 or 2, but not limited thereto. N may be equal to or different from M. Each of the M groups G12 (or each of the N groups G13) may include multiple light emitting elements 250, and when M>1 (or when N>1), the light emitting elements 250 in each of the M groups G12 (or in each of the N groups G13) are different light emitting elements 250 in the light emitting element array 25. The number of M and N can be changed according to needs. In addition, the relative positions of the M groups G12 (or the N groups G13), the number of light emitting elements 250 in each of the M groups G12 (or the N groups G13), the shape and/or size of each of the M groups G12 (or each of the N groups G13), the relative positions of the M groups G12 and the N groups G13 and/or the color of the plurality of light emitting elements 250 can be changed according to needs. For example, the color of the plurality of light emitting elements 250, the numbers of M and N, the shape and/or size of each of the M groups G12 (or each of the N groups G13) can be designed based on the environment condition, the recording scheme, or etc.

In some embodiments, as shown in FIG. 13A and FIG. 13B, M=N=4, and the four groups G12 (or the four groups G13) can be arranged in an array along the direction D1 and the direction D2. The four groups G12 and the four groups G13 may be spaced farther apart to enhance the shining/lustrous effect in the image/video. Alternatively, although not shown, the four groups G12 and the four groups G13 may be spaced closer together to reduce the shining/lustrous effect in the image/video.

In the embodiments in which the camera records the subject at an oblique angle (e.g., the long/short side of the camera body 15 is neither perpendicular nor parallel to the direction D1 and/or the direction D2), as shown in FIG. 14A and FIG. 14B, a virtual line (not shown) connecting the centers of the four groups G12 and the four groups G13 may be parallel or substantially parallel to the long/short side of the camera body 15.

In some embodiments, as shown in FIG. 15A and FIG. 15B, M=N=2, and the two groups G12 and/or the two groups G13 can be arranged in a direction that is neither perpendicular nor parallel to the direction D1 and/or the direction D2.

FIG. 16 is a schematic diagram of an image capture system according to some embodiments of the disclosure. Please refer to FIG. 16, the main differences between an image capture system 1G and the image capture system 1F in FIG. 12 are described below.

The image capture system 1G further includes a media player 26 coupled to the control unit 14 and a display 27 coupled to the media player 26. Specifically, after the control unit 14 combines the first image and the second image to form the image for surface light field displays (e.g., the Kirameki display), the corresponding data of the combined image for surface light field displays is transmitted to the display 27 through the media player 26, so that the display 27 displays the combined image.

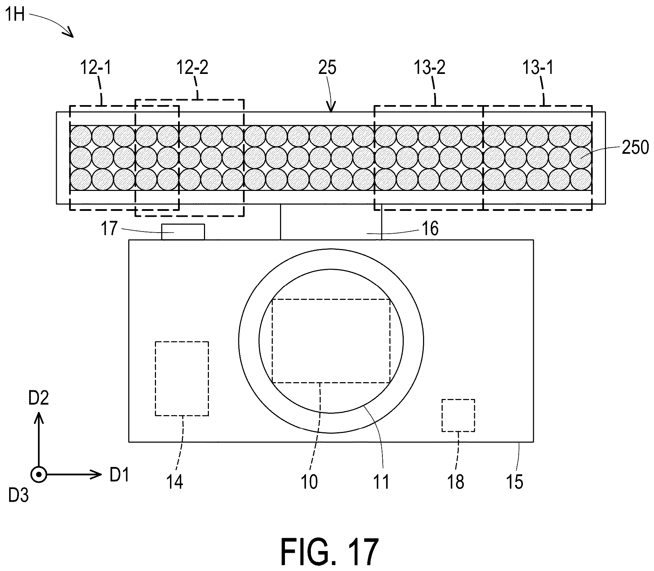

FIG. 17 is a schematic diagram of an image capture system according to some embodiments of the disclosure. Please refer to FIG. 17, the main differences between an image capture system 1H and the image capture system 1 in FIG. 1A and FIG. 1B are described below.

In the image capture system 1H, the first light projection unit and the second light projection unit include different light emitting elements 250 within a light emitting element array 25. The light emitting element array 25 includes a plurality of light emitting elements 250 arranged along the direction D1 and the direction D2, and some portions of the plurality of light emitting elements 250 can be served as the first light projection unit and the second light projection unit.

For example, the first light projection unit 12-1 and the second light projection unit 13-1 can be selected for more obvious the shining/lustrous effect in the image/video. Alternatively, the first light projection unit 12-2 and the second light projection unit 13-2 can be selected for less obvious the shining/lustrous effect in the image/video.

In some embodiments, a first recording timing of the image sensor 10 is synchronized with a turn-on timing of the first light projection unit 12-1 to obtain a first image, a second recording timing of the image sensor 10 is synchronized with a turn-on timing of the second light projection unit 13-1 to obtain a second image, a third recording timing of the image sensor 10 is synchronized with a turn-on timing of the first light projection unit 12-2 to obtain a third image, and a fourth recording timing of the image sensor 10 is synchronized with a turn-on timing of the second light projection unit 13-2 to obtain a fourth image. By recording two right images (including the first and third images) and two left images (including the second and fourth images), the data corresponding to the above images can be flexibly used for post processing of the images for surface light field displays, such as Kirameki display, but not limited thereto.

In some embodiments, although not shown, the plurality of light emitting elements 250 of the light emitting element array 25 can be divided into more than two first light projection units and more than two second light projection units, and more than two right images and more than two left images (including the second and fourth images) can be captured by the image capture system 1H.

In summary, in the embodiments of the disclosure, multiple images of the subject to be recorded at different light irradiation positions/angles can be obtained through the first and second light projection units without the need to physically change the position of the light projection unit(s). Accordingly, recording time and/or cost of the image capture process can be reduced. In addition, not only image recording but also video recording is possible.

The above embodiments are only used to illustrate the technical solution of the disclosure, but not to limit it; although the disclosure has been described in detail with reference to the foregoing embodiments, those of ordinary skill in the art should understand that they can still modify the technical solutions recorded in the foregoing embodiments, or make equivalent substitutions for some or all of the technical features. However, these modifications or substitutions do not cause the essence of the corresponding technical solution to deviate from the scope of the technical solution of each embodiment of the disclosure.

Although the embodiments and advantages of the disclosure have been disclosed above, it should be understood that anyone with ordinary skill in the art can make changes, substitutions and modifications without departing from the spirit and scope of the disclosure. Furthermore, the features of various embodiments can be mixed and replaced at will to form other new embodiments. Any process, machine, manufacture, material compositions, device, method, and steps, now or hereafter developed, which may be understood from this disclosure by any person having ordinary knowledge in the art, may be used in accordance with this disclosure, provided that substantially the same function can be performed, or substantially the same result can be obtained, in the embodiments described herein. Accordingly, the scope of protection of the disclosure includes the processes, machines, manufacturing, material compositions, devices, methods, and steps described above. In addition, each claim constitutes an individual embodiment, and the scope of protection of the disclosure also includes a combination of the claims and embodiments.

## Claims

1. An image capture system (1, 1A, 1B, 1C, 1D, 1E, 1F, 1G, 1H), comprising:
an image sensor (10);
a lens element (11) disposed in front of the image sensor (10);
a first light projection unit (12, 12A, 12B, 12C, 12-1, 12-2);
a second light projection unit (13, 13A, 13B, 13C, 13-1, 13-2); and
a control unit (14) coupled to the image sensor (10), the first light projection unit (12, 12A, 12B, 12C, 12-1, 12-2) and the second light projection unit (13, 13A, 13B, 13C, 13-1, 13-2),
wherein a first recording timing of the image sensor (10) is synchronized with a turn-on timing of the first light projection unit (12, 12A, 12B, 12C, 12-1, 12-2) to obtain a first image (RM), and a second recording timing of the image sensor (10) is synchronized with a turn-on timing of the second light projection unit (13, 13A, 13B, 13C, 13-1, 13-2) to obtain a second image (LM).

2. The image capture system (1, 1D, 1E, 1F, 1G, 1H) as claimed in claim 1, the first light projection unit (12, 12-1, 12-2) and the second light projection unit (13, 13-1, 13-2) are alternately turned on.

3. The image capture system (1A, 1B, 1C) as claimed in claim 1, wherein:
at each of the first recording timing and the second recording timing of the image sensor (10), a plurality of light emitting elements (120R, 120G, 120B, 130R, 130G, 130B, 122, 132) of each of the first light projection unit (12A, 12B, 12C) and the second light projection unit (13A, 13B, 13C) are at least partially turned on, and
wavelengths or polarizations of light beams from the first light projection unit (12A, 12B, 12C) and the second light projection unit (13A, 13B, 13C) at the first recording timing or the second recording timing of the image sensor are different.

4. The image capture system (1A) as claimed in claim 3, wherein:
at the first recording timing of the image sensor (10), the light beams (R1, B1) from the first light projection unit (12A) comprise a first peak wavelength (WR1) and a second peak wavelength (WB1) different from the first peak wavelength (WR1), and the light beams (G1) from the second light projection unit (13A) comprise a third peak wavelength (WG1) different from the first peak wavelength (WR1) and the second peak wavelength (WB1), and
at the second recording timing of the image sensor (10), the light beams (G1) from the first light projection unit (12A) comprise the third peak wavelength (WG1), and the light beams (R1, B1) from the second light projection unit (13A) comprise the first peak wavelength (WR1) and the second peak wavelength (WB1).

5. The image capture system (1A) as claimed in claim 4, wherein the third peak wavelength (WG1) is between the first peak wavelength (WR1) and the second peak wavelength (WB1).

6. The image capture system (1B) as claimed in claim 3, wherein:
at each of the first recording timing and the second recording timing of the image sensor (10), the light beams from the first light projection unit (12B) comprise a first red light beam (R1), a first green light beam (G1) and a first blue light beam (B1), the light beams from the second light projection unit (13B) comprise a second red light beam (R2), a second green light beam (G2) and a second blue light beam (B2),
peak wavelengths (WR1, WR2) of the first red light beam (R1) and the second red light beam (R2) are different,
peak wavelengths (WG1, WG2) of the first green light beam (G1) and the second green light beam (G2) are different, and
peak wavelengths (WB1, WB2) of the first blue light beam (B1) and the second blue light beam (B2) are different.

7. The image capture system (1B) as claimed in claim 6, further comprising:
a first filter (19) and a second filter (20) respectively arranged in front of the image sensor (10) at the first recording timing and the second recording timing of the image sensor (10), wherein:
the first filter (19) allows the first red light beam (R1), the first green light beam (G1) and the first blue light beam (B1) to pass through and filters the second red light beam (R2), the second green light beam (G2) and the second blue light beam (B2), and
the second filter (20) allows the second red light beam (R2), the second green light beam (G2) and the second blue light beam (B2) to pass through and filters the first red light beam (R1), the first green light beam (G1) and the first blue light beam (B1).

8. The image capture system (1C) as claimed in claim 3, wherein the light beams from the first light projection unit (12C) and the second light projection unit (13C) at the first recording timing or the second recording timing of the image sensor (10) are circularly polarized light beams in different directions.

9. The image capture system (1C) as claimed in claim 8, further comprising:
a first polarizer (21) and a second polarizer (22) respectively arranged in front of the image sensor (10) at the first recording timing and the second recording timing of the image sensor (10), wherein:
the first polarizer (21) allows the light beams from the first light projection unit (12C) to pass through and filters the light beams from and the second light projection unit (13C), and
the second polarizer (22) allows the light beams from the second light projection unit (13C) to pass through and filters the light beams from and the first light projection unit (12C).

10. The image capture system (1D) as claimed in any one of claims 1 to 9, further comprising:
a third light projection unit (23), wherein the first light projection unit (12) and the second light projection unit (13) are arranged along a first direction (D1), and the second light projection unit (13) and the third light projection unit (23) are arranged along a second direction (D2) different from the first direction (D1).

11. The image capture system (1E, 1F, 1G, 1H) as claimed in any one of claims 1 to 9, wherein a distance (DT) between the first light projection unit (12, 12-1, 12-2) and the second light projection unit (13, 13-1, 13-2) is adjustable.

12. The image capture system (1F, 1G, 1H) as claimed in claim 1, wherein the first light projection unit (12, 12-1, 12-2) and the second light projection unit (13, 13-1, 13-2) comprise different light emitting elements (250) within a light emitting element array (25).

13. The image capture system (1G) as claimed in any one of claims 1 to 12, further comprising:
a media player (26) coupled to the control unit (14); and
a display (27) coupled to the media player (26).

14. An image generation method, comprising:
turning on a first light projection unit and activating a first recording timing of an image sensor at the same time to obtain a first image (S12);
turning on a second light projection unit and activating a second recording timing of the image sensor at the same time to obtain a second image (S14); and
combining the first image and the second image (S16).

15. The image generation method as claimed in claim 14, wherein the first light projection unit (12, 12-1, 12-2) and the second light projection unit (13, 13-1, 13-2) are alternately turned on.
